# FASCICULE DE BREVET EUROPEEN

(11) **EP 3 830 344 B1**
(45) Date de publication et mention de la délivrance du brevet: **20.07.2022**
(21) Numéro de dépôt: 19742790.9
(22) Date de dépôt: 30.07.2019
(51) Int. Cl.: E02B 7/20, E02B 9/04

(54) **DISPOSITIF DE PRISE D'EAU ET DE CONTRÔLE DE DÉBIT, SON PROCÉDÉ DE PILOTAGE ET BARRAGE ÉQUIPÉ D'UN TEL DISPOSITIF**
WASSERZIEH- UND -DURCHFLUSSMENGENSTEUERUNGSVORRICHTUNG, VERFAHREN ZUM BETRIEB DAVON UND DAMIT AUSGESTATTETER DAMM
WATER DRAWING AND FLOW RATE CONTROL DEVICE, METHOD FOR OPERATING SAME AND DAM EQUIPPED WITH SUCH A DEVICE

(30) Priorité: 01.08.2018 FR 1857228
(43) Date de publication de la demande: 09.06.2021
(73) Titulaire: Electricité de France, 75008 Paris (FR)
(72) Inventeur: PELLE, Christophe, 19100 BRIVE LA GAILLARDE (FR)
(74) Mandataire: Regimbeau
(86) Numéro de dépôt international: PCT/EP2019/070420
(87) Numéro de publication internationale: WO 2020/025571

(56) Documents cités:
- US-A1- 2011 064 522
- US-B1- 6 208 037

## Description

### DOMAINE TECHNIQUE GENERAL

L'invention concerne un dispositif de prise d'eau et de contrôle de débit pour barrage hydraulique, un barrage hydraulique équipé » d'une vanne de vidange et d'un tel dispositif, et enfin un procédé de pilotage du dispositif de prise d'eau et de contrôle de débit dudit barrage.

### ETAT DE LA TECHNIQUE

Un barrage hydraulique ou hydro-électrique est une structure de génie civil placée au droit d'une rivière et qui crée, au niveau de son côté amont, une montée d'eau, dénommée "retenue d'eau". Un tel dispositif est connu de US2011/064522A, qui montre un dispositif de prise d'eau avec une vanne de vidange.

Tous ces barrages hydrauliques sont soumis à diverses réglementations.

L'une de celles-ci concerne la maîtrise du « Débit Réservé » (DR) à la rivière qui préexistait avant l'implantation du barrage hydraulique.

Le "Débit Réservé" (DR), fixé pour une période donnée, est défini comme étant le « débit minimal restant dans le lit naturel de la rivière, entre la prise d'eau et la restitution des eaux en aval du barrage, garantissant en permanence la vie, la circulation et la reproduction des espèces vivant dans ces eaux ».

Pour l'administration française, la valeur de ce « Débit Réservé » est une fraction d'un premier débit, calculé à partir d'une formule prenant en compte la topologie des versants situés en amont du barrage. Plus cette fraction augmente et plus le débit minimum d'eau que l'exploitant du barrage doit garantir en aval est important. Par ailleurs, une décision administrative peut faire varier cette fraction du simple au double, ce qui double donc ce « Débit Réservé ».

Chaque administration nationale fixe ses propres règles que l'exploitant du barrage doit mettre en oeuvre, sous peine de sanctions pénales.

Enfin, l'exploitant du barrage doit également garantir un débit supplémentaire, variable dans le temps, dénommé ci-après "Débit de Service" (DS(t)). Ce débit supplémentaire peut servir par exemple à l'irrigation ou au refroidissement d'une centrale ou être destiné à une collectivité, par exemple pour la production d'eau potable.

En conséquence, l'exploitant du barrage est contraint de garantir, en aval du barrage, un « Débit Réservé Global » (DRG(t)), variable dans le temps et qui est égal à la somme du Débit Réservé (DR) et du Débit de Service (DS(t)).

A titre d'exemple purement illustratif, pour le barrage de Roujanel, situé en France entre l'Ardèche et la Lozère, le Débit Réservé (DR) est de l'ordre de 200 l/s.

D'une manière générale, tant que le « Débit Réservé » reste faible, il peut être assuré par des traversées, c'est-à-dire des conduites, qui sont aménagées dans la partie basse de la structure du barrage, et ce, dès la construction de celui-ci. Ces traversées permettent d'assurer un débit d'eau en aval du barrage, régulé uniquement par la pression hydrostatique, grâce à la hauteur d'eau de la retenue amont, cette pression étant par exemple de l'ordre de 4 à 6 bars pour le barrage de Roujanel précité.

Cependant, en cas d'accroissement significatif du « Débit Réservé », les traversées deviennent alors insuffisantes ou inadaptées. Or, il peut être impossible techniquement ou administrativement de procéder à la vidange du barrage, pour adapter la traversée existante ou en créer d'autres.

Une solution temporaire pourrait consister à manoeuvrer partiellement la vanne de fond servant à la vidange du barrage, mais celle-ci n'est pas adaptée à cette opération, car elle est dimensionnée pour un débit d'évacuation bien supérieur (plusieurs dizaines de m³/s), alors que le débit recherché est de l'ordre de quelques centaines de litres par seconde, par exemple comme cité précédemment 200 l/s, (soit près de quatre cents fois moins que cet ordre de grandeur, pour un débit maximum d'une vanne de fond de l'ordre de 80 m³/s).

### PRESENTATION DE L'INVENTION

L'invention a donc pour but de fournir un dispositif de prise d'eau et de contrôle du débit qui puisse être installé dans un barrage hydraulique existant, afin d'assurer ledit « Débit Réservé », et ce, sans vidanger complètement ce barrage et sans rajouter de contraintes ou de surcharges sur le barrage existant et ses structures.

L'invention a également pour but de fournir un tel dispositif qui soit simple à fabriquer et à installer.

A cet effet, l'invention concerne un dispositif de prise d'eau et de contrôle de débit pour barrage hydraulique, conformé pour être positionné en partie entre une pièce fixe et une pièce mobile d'étanchéité d'une vanne de vidange du barrage, cette dernière étant disposée dans ledit barrage.

Conformément à l'invention, ce dispositif comprend :
- au moins un tuyau de captage de section plus large que haute, chaque tuyau de captage ayant une embouchure d'entrée qui permet le captage d'eau et une embouchure de sortie qui est raccordée à un collecteur dans lequel elle débouche,
- au moins un tuyau distributeur, raccordé audit collecteur ou à l'un desdits collecteurs, ce tuyau distributeur étant muni d'au moins une vanne de distribution d'eau du côté aval du barrage, telle qu'une électrovanne,
- au moins une unité centrale, distante, de pilotage du fonctionnement de ladite vanne de distribution.

Ce dispositif est d'une structure simple et peut être facilement positionné entre la partie fixe de la vanne de vidange et sa partie mobile d'étanchéité, da façon à s'étendre en aval de cette vanne et ce, sans avoir ou quasiment sans avoir à modifier la structure de ladite vanne.

Selon d'autres caractéristiques avantageuses et non limitatives de l'invention, prises seules ou en combinaison :
- ledit collecteur est un tube dont l'axe longitudinal (Y-Y') est perpendiculaire au plan de symétrie dudit tuyau de captage ;
- ledit tuyau de captage présente une forme incurvée ;
- la vanne de distribution d'eau est disposée à l'extrémité libre du tuyau distributeur ;
- ledit tuyau distributeur est raccordé au centre du collecteur ;
- ledit tuyau distributeur est raccordé à l'une des deux extrémités du collecteur ;
- ledit tuyau distributeur est fixe et vertical et est disposé de façon que son axe longitudinal (Z-Z') soit vertical et perpendiculaire à l'axe longitudinal (Y-Y') du collecteur ;
- ledit tuyau distributeur est raccordé au collecteur par un raccord pivotant, de façon à pouvoir pivoter dans un plan (P) perpendiculaire à l'axe longitudinal (Y-Y') dudit collecteur ;
- le dispositif comprend plusieurs tuyaux de captage disposés côte-à-côte de façon que leurs collecteurs respectifs soient raccordés entre eux et forment un unique collecteur à l'intérieur duquel les différents tuyaux de captage débouchent ;
- le dispositif comprend deux tuyaux distributeurs, disposés chacun à une extrémité dudit unique collecteur ;
- le tuyau de captage présente sur sa paroi supérieure au moins une ailette de renfort et/ou en ce qu'il comprend intérieurement au moins une membrure de rigidification, ladite ailette de renfort et/ou ladite membrure de rigidification s'étendant de préférence longitudinalement sur ledit tuyau de captage ;
- l'embouchure d'entrée dudit tuyau de captage est équipée d'un dispositif de filtre pour la retenue des déchets flottants ;
- le dispositif est muni d'un capteur de mesure du débit d'eau traversant la vanne de distribution, ce capteur de mesure étant connecté à ladite unité centrale de pilotage, de façon à envoyer à cette dernière les données mesurées et à en recevoir des consignes ; et
- les connexions entre l'unité centrale de pilotage et la vanne de distribution d'eau et entre l'unité centrale de pilotage et le capteur de mesure du débit d'eau, si ce dernier est présent, sont réalisées par des liaisons non filaires.

L'invention concerne également un barrage hydraulique équipé d'une vanne de vidange dudit barrage, cette vanne de vidange étant munie d'une pièce fixe et d'une pièce mobile d'étanchéité aptes à coopérer pour garantir l'étanchéité. Conformément à l'invention, ce barrage comprend un dispositif de prise d'eau et de contrôle de débit tel que précité, l'extrémité amont de ce dispositif de prise d'eau et de contrôle de débit étant insérée entre ladite pièce fixe et ladite pièce mobile d'étanchéité de ladite vanne de vidange.

L'invention concerne également un procédé de pilotage du dispositif de prise d'eau et de contrôle de débit du barrage hydraulique tel que précité. Conformément à l'invention, ce procédé consiste à piloter la fermeture et l'ouverture totale ou partielle de la vanne de distribution d'eau à l'aide de l'unité centrale, en fonction éventuellement d'informations reçues du capteur de mesure du débit d'eau, de façon à assurer le débit réservé global dudit barrage.

### PRESENTATION DES FIGURES

D'autres caractéristiques et avantages de l'invention apparaîtront de la description qui va maintenant en être faite, en référence aux dessins annexés, qui en représentent, à titre indicatif mais non limitatif, un mode de réalisation possible.

Sur ces dessins :
- la figure 1 est un schéma en coupe représentant un barrage hydraulique, équipé du dispositif conforme à l'invention,
- la figure 2 est une vue de côté et en coupe partielle du dispositif conforme à l'invention, installé dans un barrage hydraulique en aval d'une vanne de vidange de type secteur,
- la figure 3 est une vue en perspective d'un exemple de réalisation du dispositif conforme à l'invention,
- la figure 4 est une vue en perspective du dispositif de la figure 3, installé sous une vanne de vidange à secteur,
- les figures 5 et 6 sont des vues en perspective du tuyau de captage et du collecteur du dispositif conforme à l'invention,
- la figure 7 est une vue en perspective de l'embouchure d'entrée du tuyau de captage,
- la figure 8 est une vue en coupe longitudinale du tuyau de captage du dispositif conforme à l'invention, et
- la figure 9 est un schéma du pilotage du dispositif conforme à l'invention.

### DESCRIPTION DETAILLEE DE L'INVENTION

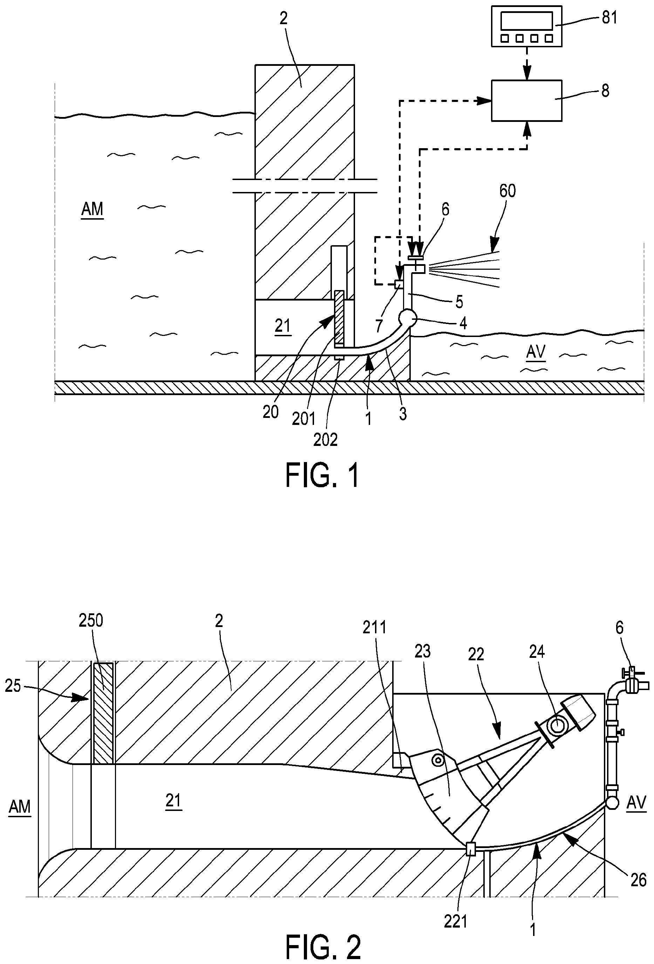

Le dispositif 1 de prise d'eau et de contrôle du débit est destiné à être installé dans un barrage hydraulique 2, tel que celui représenté sur la figure 1.

Le dispositif 1 est destiné à être installé au niveau d'une vanne de vidange du barrage, plus précisément entre une pièce fixe et une pièce mobile d'étanchéité de cette vanne.

Dans l'exemple de réalisation représenté sur la figure 1, la vanne de vidange est une vanne de fond de barrage. Toutefois, le dispositif conforme à l'invention pourrait tout aussi bien être installé en regard d'une vanne de demi-fond du barrage ou d'une vanne de surface.

Par ailleurs, deux modes de réalisation de telles vannes de vidange vont être brièvement décrits ci-après.

Sur la figure 1, la vanne de vidange, référencée 20, est de type "wagon" ou "Stoney". Une telle vanne est constituée d'une pelle 201 (qui constitue la partie mobile d'étanchéité) et qui coopère avec un seuil 202 (qui constitue la partie fixe de la vanne). La pelle 201 est apte à coulisser verticalement entre une position « haute ouverte », dans laquelle elle libère la galerie 21 dans laquelle elle est installée, en autorisant ainsi l'eau se trouvant du côté amont AM du barrage 2 à s'écouler vers le côté aval AV de celui-ci et une position « basse fermée », dans laquelle elle coopère avec le seuil 202 pour garantir l'étanchéité.

Sur la figure 2, on peut voir une vanne de vidange de type "secteur" ou "segment", qui porte la référence 22. Une telle vanne de vidange comprend un secteur 23 (partie mobile d'étanchéité), monté pivotant autour d'un axe de rotation 24.

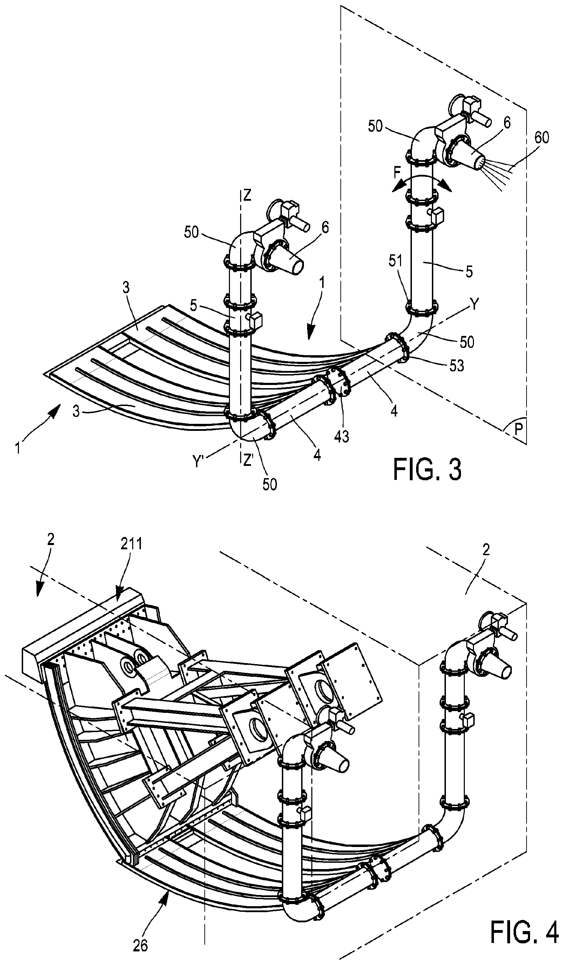

Comme on peut le voir sur la figure 4, le secteur 23 est enclavé de part et d'autre dans les parois du barrage représentées en pointillés.

Lorsque la vanne 22 est en position fermée (comme représenté sur la figure 2), la semelle du secteur 23 vient en appui sur un seuil 221 (partie fixe de la vanne) et également sur la partie haute aval 211 de la galerie 21. En position ouverte, la vanne 22 pivote vers le haut.

Un batardeau 25 est positionné en amont de la vanne 22 dans la galerie 21. Une vanne sous forme de pelle 250, y est positionnée et peut permettre d'obturer la galerie 21 en amont de la vanne 22, lorsqu'il est nécessaire d'intervenir sur celle-ci, par exemple pour des opérations de maintenance.

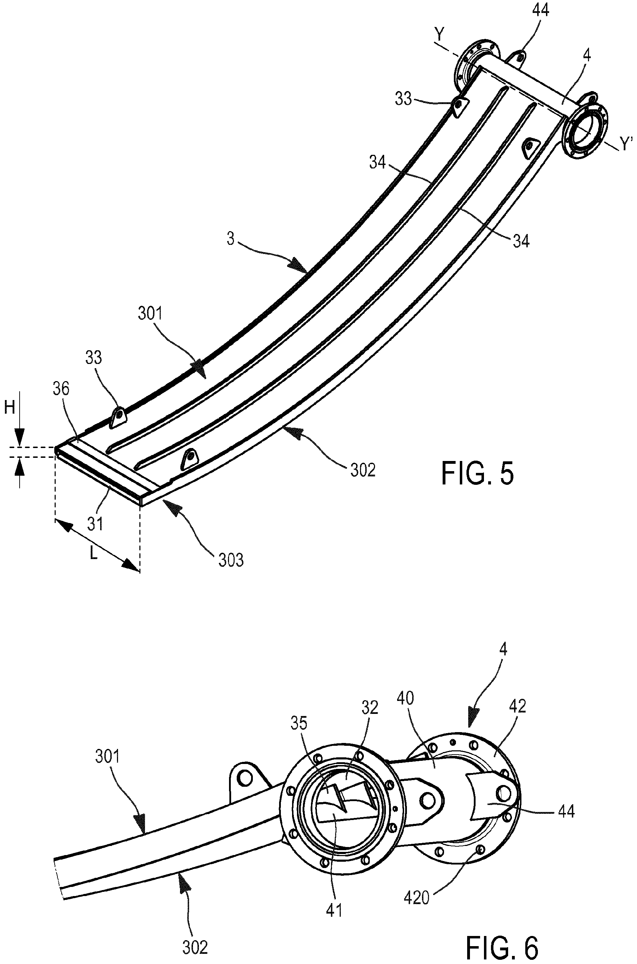

Le dispositif 1 conforme à l'invention va maintenant être décrit en liaison avec la figure 3 qui en représente un mode de réalisation possible, ainsi qu'avec les figures 5 à 8.

D'une manière générale, le dispositif 1 conforme à l'invention comprend au moins un tuyau de captage 3, au moins un collecteur 4, au moins un tuyau distributeur 5 et au moins une vanne de distribution d'eau 6, telle qu'une électrovanne.

Sur la figure 5, on peut voir que le tuyau de captage 3 présente une section transversale dont la largeur L est supérieure à la hauteur H, de préférence de forme rectangulaire. Le tuyau 3 présente ainsi une forme aplatie.

Sa paroi supérieure est référencée 301, sa paroi inférieure 302, les termes « supérieure » et « inférieure » étant à prendre en considération par rapport à la position du dispositif 1 lorsqu'il est installé dans le barrage (voir figures 1 et 2).

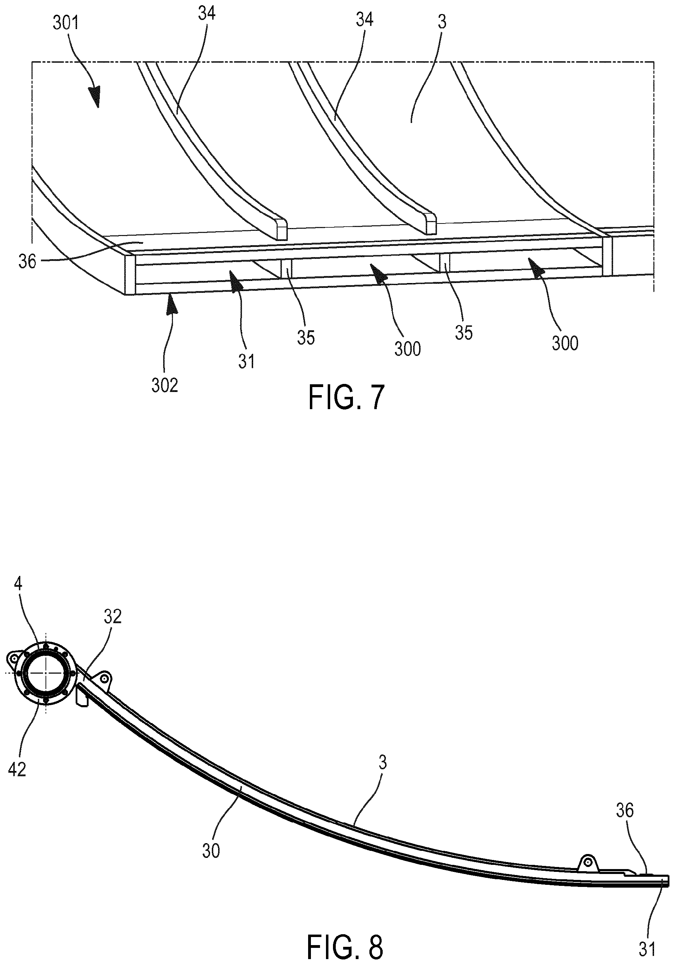

Le tuyau 3 présente une embouchure d'entrée 31 orientée vers l'amont du barrage et une embouchure de sortie 32, orientée vers l'aval du barrage lorsque le dispositif 3 est en place. L'embouchure de sortie 32 débouche dans le collecteur 4 et elle est visible sur les figures 6 et 8.

L'espace intérieur du tuyau 3 porte la référence 30.

Le tuyau de captage 3 présente un plan de symétrie P1.

Ce tuyau de captage 3 peut être incurvé, comme représenté sur les figures, ce qui lui permet d'épouser la forme du radier incurvé 26 du barrage situé à la sortie de la galerie 21, ou être rectiligne, plat. Lorsqu'il est incurvé en arc de cercle, c'est sa paroi supérieure rectangulaire 301 qui est concave et la génératrice de l'arc de cercle est parallèle à la direction de la largeur L des embouchures d'entrée 31 et de sortie 32.

Le tuyau de captage 3 peut éventuellement être équipé d'anneaux de levage 33, prévus sur la face extérieure de sa paroi supérieure 301 et qui facilitent sa manipulation et sa mise en place dans le barrage.

De façon avantageuse, le tuyau de captage 3 peut présenter des ailettes de renfort 34 qui font saillie vers l'extérieur depuis sa paroi supérieure 301 et qui s'étendent dans un plan parallèle au plan de symétrie P1 du tuyau 3 afin de renforcer sa structure.

De même, le tuyau de captage 3 peut comprendre intérieurement (c'est-à-dire dans l'espace 30), plusieurs membrures de rigidification 35, qui s'étendent longitudinalement (selon l'axe du tuyau) entre la paroi supérieure 301 et la paroi inférieure 302 du tube 3, perpendiculairement à celles-ci (voir figure 7).

Ces membrures de rigidification 35 ont pour fonction d'empêcher le tuyau 3 de s'aplatir. Elles permettent également de créer plusieurs canaux parallèles 300 pour guider le cheminement de l'eau à l'intérieur du tuyau de captage 3 et limiter les pertes de charge.

L'embouchure d'entrée 31 du tuyau de captage 3 peut éventuellement être équipée d'un filtre pour la retenue des déchets flottants, tel qu'une grille.

Enfin, le tuyau de captage 3 présente sur la face extérieure de sa paroi supérieure 301, à proximité de son embouchure d'entrée 31, un joint d'étanchéité 36 transversal.

Le collecteur 4 se présente sous la forme d'un tube 40, de préférence de section circulaire, qui comprend une fente longitudinale 41, ce tube 40 étant soudé au tuyau de captage 3 de façon à ce que sa fente 41 débouche en regard de l'embouchure de sortie 32 du tuyau 3 et soit alignée avec celle-ci (voir figure 6). Le tuyau 3 et le collecteur 4 sont ainsi en communication.

De façon avantageuse, le tube 40 du collecteur 4 présente à chacune de ses extrémités une bride annulaire 42, percée de plusieurs orifices 420. Chaque bride 42 peut permettre la fixation soit d'un élément d'obturation 43, tel qu'un disque (voir figure 3), soit de l'une des brides 42 d'un collecteur 4 d'un second tuyau de captage 3 disposé à côté du premier tuyau 3. Il est ainsi possible d'avoir plusieurs tuyaux de captage 3 côte à côte et dont les différents collecteurs sont raccordés bout à bout pour former un collecteur commun. Les orifices 420 permettent le passage de vis non représentées sur les figures.

Lorsque le dispositif 1 est en place dans le barrage 2, le collecteur 4 s'étend horizontalement ou sensiblement horizontalement.

La bride 42 permet également la fixation d'un raccord 50, de préférence coudé, sur lequel est fixé le tuyau distributeur 5, (voir figure 3).

Enfin, le collecteur 4 peut éventuellement présenter des anneaux de levage ou de pattes de levage 44, qui permettent la manipulation du dispositif 1 et son positionnement dans le barrage.

Le tuyau distributeur 5 est formé d'un tube, de préférence de section circulaire, et de préférence de même diamètre que le collecteur 4. Il est muni d'une bride 51 à l'une de ses extrémités qui est fixée au raccord 50 de sorte qu'il est en communication de fluide avec le collecteur 4. Il comprend à son autre extrémité un autre raccord 50 en coude, sur lequel est montée la vanne 6 de distribution d'eau, (voir figure 3). Le montage permet de diriger le jet d'eau sortant de la vanne 6 vers l'aval du barrage 2.

Dans l'exemple de réalisation représenté sur les figures 3 et 4, chaque collecteur 4 est équipé d'un unique tuyau distributeur 5 qui est positionné à l'une de ses deux extrémités. Bien que cela ne soit pas représenté sur les figures, ce tuyau distributeur 5 pourrait également être positionné au centre du collecteur 4 ou sensiblement au centre de celui-ci.

Il est également possible d'avoir un tuyau distributeur 5 raccordé à chacune des deux extrémités d'un collecteur 4 ou à chacune des deux extrémités d'un collecteur commun constitué de plusieurs collecteurs 4 raccordés bout à bout.

De même, dans les modes de réalisation représentés sur les figures, le tuyau distributeur 5 s'étend verticalement (lorsque le dispositif 1 est placé dans le barrage 2), et de préférence au-dessus du collecteur 4. Il pourrait toutefois être orienté vers le bas.

Le tuyau distributeur 5 peut être fixe et son axe longitudinal Z-Z' est alors vertical et est perpendiculaire à l'axe longitudinal Y-Y' du collecteur 4.

De plus, comme représenté sur la figure 3, un raccord rotatif 53 peut être positionné entre le collecteur 4 et le raccord coudé 50 du tuyau 5, de façon à autoriser le pivotement du tuyau distributeur 5 dans un plan P perpendiculaire à l'axe longitudinal Y-Y' du collecteur 4. Ce déplacement permet d'orienter angulairement le jet d'eau 60 sortant de la vanne 6. Ce mouvement est représenté par la double flèche F sur la figure 3. Le plan P est parallèle au plan de symétrie P1.

Le tuyau de captage 3, le collecteur 4 et le tuyau distributeur 5 sont avantageusement réalisés en métal. Les tôles formant le tuyau 3 sont de préférence mécano-soudées.

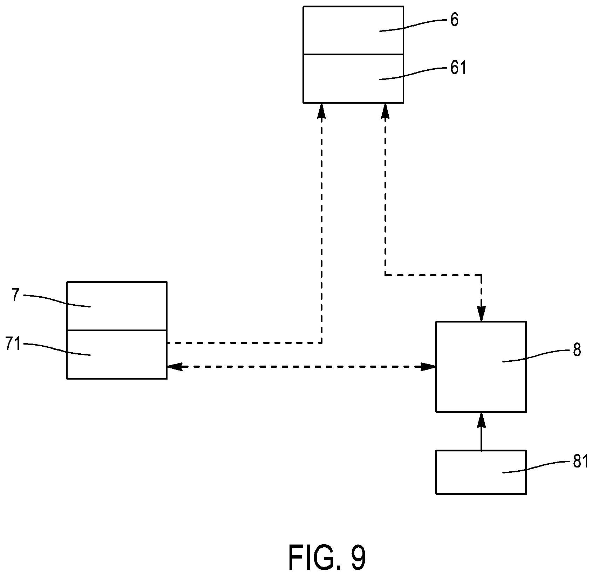

Comme on peut le voir sur les figures 1 ou 9, le dispositif 1 conforme à l'invention comprend également un dispositif de mesure du débit 7 ou débitmètre, positionné de préférence sur le tuyau distributeur 5 et qui enregistre le débit de liquide passant à l'intérieur de celui-ci.

Un module de contrôle 71 du débitmètre 7 transmet des mesures instantanées de débit à une unité centrale 8 distante et peut également transmettre des signaux d'alerte, en cas d'atteinte de valeurs préalablement fixées et qui lui ont été transmises par ladite unité centrale de pilotage 8.

L'unité centrale 8 est par exemple un ordinateur. Une interface utilisateur 81, telle qu'un écran ou un clavier, permet à l'opérateur chargé de piloter le débit réservé global du barrage 2, de rentrer des consignes dans l'unité centrale 8, pour pouvoir actionner la vanne de distribution 6 (électrovanne), via le module de contrôle 61 de celle-ci.

Le module de contrôle 71 du débitmètre 7 peut également envoyer des consignes d'ouverture ou de fermeture au module de contrôle 61 si la vanne de distribution 6 est asservie au débitmètre 7.

Le module de contrôle 61 est également apte à émettre des données de fonctionnement, (par exemple la validation d'un changement de consignes), vers l'unité centrale 8.

Les connexions entre le débitmètre 7 (ou son module de contrôle 71), la vanne 6 (ou son module de contrôle 61) et l'unité centrale 8 peuvent être des liaisons filaires. De préférence toutefois, ce seront des liaisons non filaires, par exemple des liaisons wifi ou radio.

Le dispositif 1 est positionné dans le barrage 2 de façon que son extrémité amont 303, située du côté de son embouchure d'entrée 31, soit insérée entre la pièce fixe (seuil) 202, 221 et la pièce mobile d'étanchéité 201, 23 des vannes 20 ou 22.

En pratique, la pièce d'étanchéité mobile de la vanne qui est généralement un joint d'étanchéité solidaire de la vanne vient reposer contre le joint d'étanchéité 36 lorsque la vanne 20 ou 22 est en position fermée.

Dans la position fermée de la vanne 20 ou 22, l'embouchure d'entrée 31 du dispositif 1 reste toujours ouverte, ce qui permet d'alimenter en permanence en eau le dispositif 1 et d'assurer ainsi le "Débit Réservé Global" en aval. La circulation d'eau dans le dispositif 1 s'effectue grâce au gradient de pression hydrostatique de l'eau entre la galerie 21 et le milieu extérieur qui est à la pression atmosphérique.

De plus, la vanne de vidange 20, 22 continue de pouvoir être manipulée pour assurer la vidange décennale ou répondre à des impératifs de sûreté.

On comprend aisément que le dispositif conforme à l'invention est modulaire, en ce sens que plusieurs dispositifs 1 et notamment plusieurs tuyaux de captage 3 peuvent être disposés côte à côte en regard de la vanne 20 ou 22, en fonction de la largeur de celle-ci, et en fonction du "Débit Réservé Global" calculé pour le barrage 2.

Lorsque plusieurs tuyaux de captage 3 sont disposés côte à côte comme en figure 4 par exemple, l'un peut servir à assurer le débit réservé et un autre un débit d'irrigation par exemple.

Compte tenu du positionnement du dispositif 1 par rapport à la vanne de vidange 20, 22, on comprend qu'il est facile de l'installer dans le barrage 2, sans modifier quasiment la structure de ladite vanne de vidange. Seule la course de déplacement de la paroi mobile d'étanchéité 201, 23 est légèrement modifiée. Il est uniquement éventuellement nécessaire d'adapter une pièce additionnelle au niveau de la partie haute aval 211 de la galerie 21.

De plus, une fois en place, le dispositif 1 n'altère pas les capacités d'évacuation de la vanne 20, 22.

Enfin, il n'est pas nécessaire de vidanger le barrage 2 pour installer le dispositif 1 à condition qu'il existe en amont un dispositif d'isolement de la vanne de vidange 20, 22, tel qu'un batardeau 25.

## Revendications

1. Dispositif (1) de prise d'eau et de contrôle de débit pour barrage hydraulique (2), conformé pour être positionné en partie entre une pièce fixe (202, 221) et une pièce mobile d'étanchéité (201, 23) d'une vanne de vidange du barrage (20, 22), cette dernière étant disposée dans ledit barrage le dispositif comprenant
- au moins un tuyau de captage (3) de section plus large que haute, chaque tuyau de captage (3) ayant une embouchure d'entrée (31) qui permet le captage d'eau et une embouchure de sortie (32) qui est raccordée à un collecteur (4) dans lequel elle débouche,
- au moins un tuyau distributeur (5), raccordé audit collecteur (4) ou à l'un desdits collecteurs (4), ce tuyau distributeur (5) étant muni d'au moins une vanne de distribution d'eau (6) du côté aval du barrage, telle qu'une électrovanne,
- au moins une unité centrale (8), distante, de pilotage du fonctionnement de ladite vanne de distribution (6).

2. Dispositif selon la revendication 1, **caractérisé en ce que** ledit collecteur (4) est un tube (40) dont l'axe longitudinal (Y-Y') est perpendiculaire au plan de symétrie (P1) dudit tuyau de captage (3).

3. Dispositif selon la revendication 1 ou 2, **caractérisé en ce que** ledit tuyau de captage (3) présente une forme incurvée.

4. Dispositif selon l'une des revendications précédentes, **caractérisé en ce que** la vanne de distribution d'eau (6) est disposée à l'extrémité libre du tuyau distributeur (5).

5. Dispositif selon l'une des revendications précédentes, **caractérisé en ce que** ledit tuyau distributeur (5) est raccordé au centre du collecteur (4).

6. Dispositif selon l'une des revendications 1 à 4, **caractérisé en ce que** ledit tuyau distributeur (5) est raccordé à l'une des deux extrémités du collecteur (4).

7. Dispositif selon l'une des revendications précédentes, **caractérisé en ce que** ledit tuyau distributeur (5) est fixe et vertical et est disposé de façon que son axe longitudinal (Z-Z') soit vertical et perpendiculaire à l'axe longitudinal (Y-Y') du collecteur (4).

8. Dispositif selon l'une des revendications 1 à 6, **caractérisé en ce que** ledit tuyau distributeur (5) est raccordé au collecteur (4) par un raccord pivotant (53), de façon à pouvoir pivoter dans un plan (P) perpendiculaire à l'axe longitudinal (Y-Y') dudit collecteur (4).

9. Dispositif selon l'une des revendications précédentes, **caractérisé en ce qu'**il comprend plusieurs tuyaux de captage (3) disposés côte-à-côte de façon que leurs collecteurs respectifs (4) soient raccordés entre eux et forment un unique collecteur à l'intérieur duquel les différents tuyaux de captage (3) débouchent.

10. Dispositif selon la revendication 9, **caractérisé en ce qu'**il comprend deux tuyaux distributeurs (5), disposés chacun à une extrémité dudit unique collecteur.

11. Dispositif selon l'une des revendications précédentes, **caractérisé en ce que** le tuyau de captage (3) présente sur sa paroi supérieure (301) au moins une ailette de renfort (34) et/ou **en ce qu'**il comprend intérieurement au moins une membrure de rigidification (35), ladite ailette de renfort (34) et/ou ladite membrure de rigidification (35) s'étendant de préférence longitudinalement sur ledit tuyau de captage.

12. Dispositif selon l'une des revendications précédentes, **caractérisé en ce que** l'embouchure d'entrée (31) dudit tuyau de captage (3) est équipée d'un dispositif de filtre pour la retenue des déchets flottants.

13. Dispositif selon l'une des revendications précédentes, **caractérisé en ce qu'**il est muni d'un capteur de mesure (7) du débit d'eau traversant la vanne de distribution (6), ce capteur de mesure (7) étant connecté à ladite unité centrale de pilotage (8), de façon à envoyer à cette dernière les données mesurées et à en recevoir des consignes.

14. Dispositif selon l'une des revendications précédentes, **caractérisé en ce que** les connexions entre l'unité centrale de pilotage (8) et la vanne de distribution d'eau (6) et entre l'unité centrale de pilotage (8) et le capteur de mesure du débit d'eau (7), si ce dernier est présent, sont réalisées par des liaisons non filaires.

15. Barrage hydraulique (2) équipé d'une vanne de vidange (20, 22) dudit barrage, cette vanne de vidange (20, 22) étant munie d'une pièce fixe (202, 221) et d'une pièce mobile d'étanchéité (201, 23) aptes à coopérer pour garantir l'étanchéité, **caractérisé en ce qu'**il comprend un dispositif (1) de prise d'eau et de contrôle de débit selon l'une des revendications précédentes et **en ce que** l'extrémité amont (303) de ce dispositif de prise d'eau et de contrôle de débit (1) est insérée entre ladite pièce fixe (202, 221) et ladite pièce mobile d'étanchéité (201, 23) de ladite vanne de vidange (20, 22).

16. Procédé de pilotage du dispositif (1) de prise d'eau et de contrôle de débit du barrage hydraulique (2) selon la revendication 15, le procédé consistant à piloter la fermeture et l'ouverture totale ou partielle de la vanne de distribution d'eau (6) à l'aide de l'unité centrale (8), en fonction éventuellement d'informations reçues du capteur de mesure du débit d'eau (7), de façon à assurer le débit réservé global dudit barrage (2).

## Patentansprüche

1. Wasserentnahme- und Durchflussmengensteuerungsvorrichtung (1) für Staudamm (2), die angepasst ist, teilweise zwischen einem festen Teil (202, 221) und einem beweglichen Dichtungsteil (201, 23) eines Auslassschiebers (20, 22) des Damms positioniert zu sein, wobei dieser letztere in dem Damm angeordnet ist, wobei die Vorrichtung umfasst:
- mindestens ein Sammelrohr (3) mit einem Querschnitt, der breiter als hoch ist, wobei jedes Sammelrohr (3) eine Eingangsmündung (31), die das Sammeln von Wasser ermöglicht, und eine Ausgangsmündung (32) aufweist, die an einen Sammler (4) angeschlossen ist, in den sie mündet,
- mindestens ein Verteilungsrohr (5), das an den Sammler (4) oder an einen der Sammler (4) angeschlossen ist, wobei dieses Verteilungsrohr (5) mit mindestens einem Wasserverteilungsschieber (6), wie beispielsweise einem Magnetschieber, auf der stromabwärtigen Seite des Damms versehen ist,
- mindestens eine entfernte Zentraleinheit (8) zur Steuerung des Betriebs des Verteilungsschiebers (6).

2. Vorrichtung nach Anspruch 1, **dadurch gekennzeichnet, dass** der Sammler (4) ein Rohr (40) ist, dessen Längsachse (Y-Y') senkrecht zur Symmetrieebene (P1) des Sammelrohrs (3) ist.

3. Vorrichtung nach Anspruch 1 oder 2, **dadurch gekennzeichnet, dass** das Sammelrohr (3) eine gekrümmte Form aufweist.

4. Vorrichtung nach einem der vorhergehenden Ansprüche, **dadurch gekennzeichnet, dass** der Wasserverteilungsschieber (6) am freien Ende des Verteilungsrohrs (5) angeordnet ist.

5. Vorrichtung nach einem der vorhergehenden Ansprüche, **dadurch gekennzeichnet, dass** das Verteilungsrohr (5) an die Mitte des Sammlers (4) angeschlossen ist.

6. Vorrichtung nach einem der Ansprüche 1 bis 4, **dadurch gekennzeichnet, dass** das Verteilungsrohr (5) an eines der beiden Enden des Sammlers (4) angeschlossen ist.

7. Vorrichtung nach einem der vorhergehenden Ansprüche, **dadurch gekennzeichnet, dass** das Verteilungsrohr (5) fest und vertikal ist und derart angeordnet ist, dass seine Längsachse (Z-Z') vertikal und senkrecht zur Längsachse (Y-Y') des Sammlers (4) ist.

8. Vorrichtung nach einem der Ansprüche 1 bis 6, **dadurch gekennzeichnet, dass** das Verteilungsrohr (5) durch einen schwenkbaren Anschluss (53) an den Sammler (4) angeschlossen ist, derart, dass es in einer Ebene (P) senkrecht zur Längsachse (Y-Y') des Sammlers (4) schwenken kann.

9. Vorrichtung nach einem der vorhergehenden Ansprüche, **dadurch gekennzeichnet, dass** sie mehrere Sammelrohre (3) umfasst, die derart nebeneinander angeordnet sind, dass ihre jeweiligen Sammler (4) aneinander angeschlossen sind und einen einzigen Sammler bilden, in dessen Inneren die verschiedenen Sammelrohre (3) münden.

10. Vorrichtung nach Anspruch 9, **dadurch gekennzeichnet, dass** sie zwei Verteilrohre (5) umfasst, die jeweils an einem Ende des einzigen Sammlers angeordnet sind.

11. Vorrichtung nach einem der vorhergehenden Ansprüche, **dadurch gekennzeichnet, dass** das Sammelrohr (3) auf seiner oberen Wand (301) mindestens einen Verstärkungsflügel (34) aufweist, und/oder dadurch, dass es innen mindestens ein Versteifungsgerippe (35) umfasst, wobei der Verstärkungsflügel (34) und/oder das Versteifungsgerippe (35) sich vorzugsweise längs auf dem Sammelrohr erstrecken.

12. Vorrichtung nach einem der vorhergehenden Ansprüche, **dadurch gekennzeichnet, dass** die Eingangsmündung (31) des Sammelrohrs (3) mit einer Filtervorrichtung zum Zurückhalten schwimmender Rückstände ausgerüstet ist.

13. Vorrichtung nach einem der vorhergehenden Ansprüche, **dadurch gekennzeichnet, dass** sie mit einem Sensor (7) zur Messung der Wasserdurchflussmenge versehen ist, die den Verteilungsschieber (6) durchquert, wobei dieser Messsensor (7) derart mit der Steuerungszentraleinheit (8) verbunden ist, dass er an diese letztere Messdaten sendet und Einstellwerte davon empfängt.

14. Vorrichtung nach einem der vorhergehenden Ansprüche, **dadurch gekennzeichnet, dass** die Verbindungen zwischen der Steuerungszentraleinheit (8) und dem Wasserverteilungsschieber (6) und zwischen der Steuerungszentraleinheit (8) und dem Wasserdurchflussmengen-Messensor (7), wenn dieser letztere vorhanden ist, durch drahtlose Verbindungen ausgeführt sind.

15. Staudamm (2), der mit einem Auslassschieber (20, 22) des Damms ausgerüstet ist, wobei dieser Auslassschieber (20, 22) mit einem festen Teil (202, 221) und einem beweglichen Dichtungsteil (201, 23) versehen ist, die geeignet sind, zusammenzuwirken, um die Dichtheit zu gewährleisten, **dadurch gekennzeichnet, dass** er eine Wasserentnahme- und Durchflussmengensteuerungsvorrichtung (1) nach einem der vorhergehenden Ansprüche umfasst, und dadurch, dass das stromabwärtige Ende (303) dieser Wasserentnahme- und Durchflussmengensteuerungsvorrichtung (1) zwischen dem festen Teil (202, 221) und dem beweglichen Dichtungsteil (201, 23) des Auslassschiebers (20, 22) eingefügt ist.

16. Verfahren zur Steuerung der Wasserentnahme- und Durchflussmengensteuerungsvorrichtung (1) des Staudamms (2) nach Anspruch 15, wobei das Verfahren darin besteht, das Schließen und das vollständige oder partielle Öffnen des Wasserverteilungsschiebers (6) mittels der Zentraleinheit (8), gegebenenfalls in Abhängigkeit von Informationen, die von dem Wasserdurchflussmengen-Messsensor (7) empfangen werden, zu steuern, derart dass die Pflichtwasser-Gesamtdurchflussmenge des Damms (2) gewährleistet wird.

## Claims

1. A water intake and flow monitoring device (1) for hydraulic dam (2), shaped to be partly positioned between a fixed part (202, 221) and a movable sealing part (201, 23) of a dam drain valve (20, 22), the latter being disposed in said dam, the device comprising:
- at least one catchment pipe (3) of section wider than it is high, each catchment pipe (3) having an inlet mouth (31) which allows water catchment and an outlet mouth (32) which is connected to a manifold (4) into which it opens out,
- at least one distributor pipe (5), connected to said manifold (4) or to one of said manifolds (4), this distributor pipe (5) being provided with at least one water distribution valve (6) on the downstream side of the dam, such as a solenoid valve,
- at least one remote central unit (8) for controlling the operation of said distribution valve (6) .

2. The device according to claim 1, **characterized in that** said manifold (4) is a tube (40) whose longitudinal axis (Y-Y') is perpendicular to the plane of symmetry (PI) of said catchment pipe (3).

3. The device according to claim 1 or 2, **characterized in that** said catchment pipe (3) has a curved shape.

4. The device according to any of the preceding claims, **characterized in that** the water distribution valve (6) is disposed at the free end of the distributor pipe (5).

5. The device according to any of the preceding claims, **characterized in that** said distributor pipe (5) is connected to the center of the manifold (4).

6. The device according to any of claims 1 to 4, **characterized in that** said distributor pipe (5) is connected to one of the two ends of the manifold (4).

7. The device according to any of the preceding claims, **characterized in that** said distributor pipe (5) is fixed and vertical and is disposed so that its longitudinal axis (Z-Z') is vertical and perpendicular to the longitudinal axis (Y-Y') of the manifold (4).

8. The device according to any of claims 1 to 6, **characterized in that** said distributor pipe (5) is connected to the manifold (4) by a swivel connection (53), so as to be able to pivot in a plane (P) perpendicular to the longitudinal axis (Y-Y') of said manifold (4).

9. The device according to any of the preceding claims, **characterized in that** it comprises several catchment pipes (3) disposed side by side such that their respective manifolds (4) are connected together and form a single manifold inside which the various catchment pipes (3) open out.

10. The device according to claim 9, **characterized in that** it comprises two distributor pipes (5), each disposed at one end of said single manifold.

11. The device according to any of the preceding claims, **characterized in that** the catchment pipe (3) has on its upper wall (301) at least one reinforcing fin (34) and/or **in that** it comprises internally at least one stiffening chord (35), said reinforcing fin (34) and/or said stiffening chord (35) preferably extending longitudinally over said catchment pipe.

12. The device according to any of the preceding claims, **characterized in that** the inlet mouth (31) of said catchment pipe (3) is equipped with a filter device for holding the floating waste.

13. The device according to any of the preceding claims, **characterized in that** it is provided with a sensor for measuring (7) the water flow passing through the distribution valve (6), this measuring sensor (7) being connected to said central control unit (8), so as to send the measured data to the latter and to receive instructions therefrom.

14. The device according to any of the preceding claims, **characterized in that** the connections between the central control unit (8) and the water distribution valve (6) and between the central control unit (8) and the water flow measuring sensor (7), if the latter is present, are made through non-wired links.

15. A hydraulic dam (2) equipped with a drain valve (20, 22) for draining said dam, this drain valve (20, 22) being provided with a fixed part (202, 221) and a movable sealing part (201, 23) able to cooperate in order to guarantee the sealing, **characterized in that** it comprises a water intake and flow monitoring device (1) according to any of the preceding claims and **in that** the upstream end (303) of this water intake and flow monitoring device (1) is inserted between said fixed part (202, 221) and said movable sealing part (201, 23) of said drain valve (20, 22).

16. A method for controlling the water intake and flow monitoring device (1) for the hydraulic dam (2) according to claim 15, the method consisting in controlling the closing and the total or partial opening of the water distribution valve (6) using the central unit (8), possibly depending on information received from the water flow measuring sensor (7), so as to ensure the overall instream flow of said dam (2).
